# EUROPÄISCHE PATENTSCHRIFT

(11) **EP 0 874 035 B1**
(45) Veröffentlichungstag und Bekanntmachung des Hinweises auf die Patenterteilung: **13.02.2002**
(21) Anmeldenummer: 98106346.4
(22) Anmeldetag: 07.04.1998
(51) Int. Cl.: C09J 7/02, B32B 25/08

(54) **Mehrlagiges Klebeband**
Multilayered adhesive tape
Ruban adhésif multicouche

(30) Priorität: 23.04.1997 DE 19716995
(43) Veröffentlichungstag der Anmeldung: 28.10.1998
(73) Patentinhaber: Tesa AG, 20253 Hamburg (DE)
(72) Erfinder: Szonn, Bodo, 24629 Kisdorf (DE); Kluge-Paletta, Werner, 21244 Buchholz (DE)

(56) Entgegenhaltungen:
- EP-A- 0 494 619
- DE-A- 2 116 558
- DE-A- 2 455 133

## Beschreibung

Die Erfindung betrifft ein selbstklebend beschichtetes Klebeband mit einer gummielastischen Trägerschicht und einer Zwischenschicht zwischen Trägerschicht und Klebebeschichtung, des weiteren Verfahren zur Herstellung eines derartigen Klebebands.

Die Verwendung von Zwischenschichten zwischen eigentlicher Trägerschicht und der klebenden Beschichtung ist bekannt. Diese Zwischenschichten dienen unter anderem dazu, eine Migration von Bestandteilen, mit der die Trägerschicht abgemischt sein kann, aus der Trägerschicht in den Kleber abzuschwächen oder zu vermeiden. Eine derartige Migration kann zu strukturellen Veränderungen in der Kleberschicht und/oder zu Ablagerungen auf der Kleberoberfläche und damit zu einer Reduzierung der Klebkräfte führen. Den Zwischenschichten kommt darüber hinaus die Aufgabe zu, unebene Trägeroberflächen zu glätten, damit der darauf zu laminierenden, mehr oder weniger gummielastisch verformbaren Kleberschicht eine optimale Verklebungsfläche im Augenblick des Laminierens zur Verfügung steht.
Im Falle des verklebten Klebebandes können Zwischenschichten, besonders wenn sie energieelastisch verformbar sind, die Funktion haben, Spannungsspitzen, die größer sind als die mittlere auf die Verklebungsfläche wirkende Kraft, aufzunehmen und über die Fläche der Verklebung zu verteilen, um damit einem Bruch der Verklebung entgegenzuwirken.
Schließlich werden Zwischenschichten als Primer zwischen Träger und Kleber verwendet, wenn diese infolge stärker voneinander abweichender Polaritäten nur schlecht aufeinander haften.

Beispielsweise ist für diesen Einsatzzweck die Verwendung von dünnen Schichten aus Polyamid bekannt.
Nachteilig bei den herkömmlichen Zwischenschichten ist oft, daß sie die sperrende, die glättende und die kräfteaufnehmende Funktion oft erfüllen, aber gleichzeitig die Adhäsion dieser zum darunter liegenden Träger nicht ausreichend ist. Bei höheren Beanspruchungen des Klebebands kann es dann zu Delaminierungen kommen, die gegebenenfalls zu einem vollständigen Versagen der Klebeverbindung führen.

Aufgabe der Erfindung war es daher, ein Klebeband zur Verfügung zu stellen, das bei einer gummielastischen Trägerschicht eine Zwischenschicht aufweist, die sicher auf der Trägerschicht verankert.
Zur Lösung der Aufgabe schlägt die Erfindung ein ein- oder beidseitig selbstklebend ausgerüstetes Klebeband mit einer gummielastischen Trägerschicht vor, wobei die Trägerschicht im wesentlichen aus einem Styrol-Butadien-Copolymer besteht.
Auf die Trägerschicht ist ein- oder beidseitig eine Selbstklebemasse aufgetragen, wobei zwischen Trägerschicht und Selbstklebemasse eine Zwischenschicht aus Polyphenylenether vorhanden ist.

In einer bevorzugten Ausführungsform besteht der Polyphenylenether aus Poly(oxy-2,6-dimethyl-p-phenylen), wobei dieser zur Flexibilisierung weiterhin vorteilhaft unterschüssig mit Polystyrol, Polyamid oder einem Styrol-Acrylnitril-Copolymerisat abgemischt sein kann. Aus dem gleichen Grunde ist es außerdem möglich, den Polyphenylenether mit einem Blockcopolymerisat auf Basis SEBS zu vermischen.

Die Zwischenschicht kann dabei durch Extrusion mit oder ohne Hilfsträger hergestellt werden, und zwar in einer Dicke von 5 um bis 40 um, insbesondere 8 µm.

Alternativ kann die Zwischenschicht aus gelöster Form auf einem Hilfsträger hergestellt werden.

Sollte ein Hilfsträger Verwendung finden, ist die Zwischenschicht von diesem ohne Einschränkung wieder abziehbar.

Vorzugsweise beträgt der Styrolanteil in der Gesamtzusammensetzung der Trägerschicht mindestens 12 Gew.-%.

Vorteilhafterweise kann das Styrol-Butadien-Copolymer der Trägerschicht ein aus Lösung oder im Emulsionspolymerisationsverfahren hergestelltes statistisches Copolymer mit einem Anteil von mindestens 23,5 Gew.-% Styrol sein.

Das für die Trägerschicht verwendete Styrol-Butadien-Copolymer kann physikalisch - beispielsweise durch eine Vernetzung unter Verwendung von Elektronenstrahlen - oder chemisch vernetzbar sein.

Zur Erhöhung der Standfestigkeit des Klebebandes kann dies mit üblichen Alterungsschutzmitteln, die je nach Anwendungsfall aus der Klasse der verfärbenden oder nicht verfärbenden Alterungsschutzmitteln stammen können, insbesondere im Bereich zwischen 0 bis 10 phr, sowie bekannten Lichtschutzmitteln oder Ozonschutzmitteln gefüllt werden. Darüber hinaus ist eine Abmischung mit Vulkanisationsmitteln (wie beispielsweise Peroxiden oder Schwefel, Schwefelspendern oder Beschleunigern) und/oder der Zusatz von Fettsäure, insbesondere im Bereich von 0 bis 10 phr, sowie die Verwendung von Weichmachern möglich.
Um die gewünschten Eigenschaften des Trägers gezielt einzustellen, kann gegebenenfalls die Verwendung von weiteren Füllstoffen erfolgen. So kann das Styrol-Butadien-Copolymer mit verstärkenden, semiverstärkenden oder nicht verstärkenden Rußen insbesondere zwischen 0 bis 50 phr, Zinkoxid insbesondere zwischen 0 bis 50 phr und/oder anderen Füllstoffen wie Kieselsäure, Silikaten oder Kreide versetzt werden. Neben den genannten ist auch die Verwendung weiterer Füllstoffe möglich. Weiterhin können auch Harze aus der Klasse der Phenol- und/oder Kohlenwasserstoffharze im Bereich insbesondere zwischen 0 bis 50 phr zugesetzt werden.
Alle diese genannten Zusatzstoffe können je nach Einsatzzweck des Selbstklebebandes entweder allein oder in beliebiger Kombination miteinander zur Herstellung des Styrol-Butadien-Copolymer eingesetzt werden, um eine optimale Abstimmung auf die Verwendung zu erhalten.
Durch den Einsatz dieser Zusatzstoffe ist auch die Schwarzfärbung des Trägers, wie sie von der Industrie i.a. gefordert wird, problemlos möglich.

Die Trägerschicht weist eine Dicke von 400 µm bis 3000 um, insbesondere 500 µm bis 1400 µm, auf.

Als Füllstoff zur Modifizierung der Trägereigenschaften können der Trägerrezeptur Mikrovollkugeln mit einem Volumenanteil von 1 Vol.-% bis 50 Vol.-%, insbesondere 10 Vol.-% bis 30 Vol.-%, zugesetzt werden. Die in der Trägerrezeptur enthaltenen Mikrovollkugeln bewirken besonders vorteilhafte Eigenschaften des erfindungsgemäßen Selbstklebebandes, wenn es sich bei den Mikrovollkugeln um Glasmikrovollkugeln mit einem Durchmesser von 1 µm bis 100 µm handelt, insbesondere 10 µm bis 60 µm.

Die Anfertigung der Trägermischung findet vorzugsweise in einem für die Elastomer-Compoundierung typischen Innenmischer statt. Das Styrol-Butadien-Copolymer wird dabei insbesondere auf einen Mooneywert ML₁₊₃ (100 °C) im Range von 40 bis 80 eingestellt. Vorzugsweise erfolgt eine lösungsmittelfreie Verarbeitung. Dem Styrol-Butadien-Copolymer werden gegebenenfalls gleichzeitig die gewünschten Füllstoffe zugesetzt. Das Styrol-Butadien-Copolymer kann anschließend auf handelsüblichen Maschinen auf die gewünschte Dicke extrudiert oder kalandriert werden. Dabei ergibt sich eine Dicke der Trägerschicht innerhalb der oben angeführten Bereiche.

Auf die bekannte Technologie der Verarbeitung von Styrol-Butadien-Copolymeren und den bekannten, dafür eingesetzten Additiven, etwa gemäß dem Buch von Wemer Kleemann (Werner Kleemann: "Mischungen für die Elastverarbeitung", Deutscher Verlag für Grundstoffindustrie, Leipzig 1982), wird ausdrücklich Bezug genommen.

Nach dem Auftragen der Zwischenschicht und Abwarten einer gewissen Zeitspanne, innerhalb derer die notwendige Diffusion stattfindet, kann die Vernetzung des Trägers durch Elektronenstrahlen oder durch bekannte chemische Vernetzer erfolgen.

Alternativ ist es auch möglich, die auf Polyphenylenether basierende Zwischenschicht bei Temperaturen höher als 120 °C mit einem Kalander auf den Träger zu laminieren und unmittelbar danach inline die Vernetzung des Trägers vorzunehmen.

Der thermodynamische Zustand des Trägers vor dem Kontakt mit der Zwischenschicht ermöglicht den Molekülen und/oder Molekülsegmenten die für eine Diffusion erforderliche Beweglichkeit. Vorzugsweise findet die Vernetzung des Trägers daher erst nach Ablauf des Diffusionsprozesses statt.

Die druckempfindliche Selbstklebemasse besteht vorzugsweise aus an sich bekannten Copolymerisaten von Methylacrylat mit 2-Etylhexylacrylat und Acrylsäure, vorzugsweise mit einer Zusammensetzung von 20 Gew.-% bis 40 % Methylacrylat, 20 Gew.-% bis 70 Gew.-% 2-Etylhexylacrylat und 0 Gew.-% bis 10 Gew.-% Acrylsäure.

Der Zusatz weiterer, bekannter Komponenten ist zur Erzielung bestimmter Eigenschaften möglich, insbesondere der Zusatz von Vernetzern, Klebharzen, Alterungsschutzmitteln.
Die Selbstklebemasse kann direkt aus der Lösung, Dispersion oder Schmelze oder im Transferverfahren oder durch Koextrusion mit dem Träger und der Zwischenschicht aufgetragen werden. Insbesondere im Fall der Koextrusion ist eine Vernetzung von Träger und Klebmasse inline durch die Elektronenstrahlhärtung vorteilhaft. Das Auftragsgewicht der Klebemasse ist ebenfalls je nach Einsatzzweck beliebig innerhalb des Bereiches von 10 g/m² bis 250 g/m², vorzugsweise 40 g/m² bis 150 g/m², wählbar.
Die Selbstklebebeschichtung weist eine Dicke von 30 um bis 100 µm auf, insbesondere 50 µm.
Die Affinität der Selbstklebemasse ist ausreichend, um eine den Ansprüchen genügende Adhäsion auf dem Polyphenylenether der Zwischenschicht zu gewährleisten.

Weiterhin können die eine oder beide Selbstklebebeschichtungen mit einem Trennpapier eingedeckt sein, vorzugsweise einem beidseitig antiadhäsiv beschichteten Abdeckpapier oder einer Folie auf Basis eines Polyolefins. Die Folie kann beidseitig antiadhäsiv ausgerüstet sein.

Des weiteren umfaßt der Erfindungsgedanke aber auch Verfahren zur Herstellung eines erfindungsgemäßen Klebebands. In einem bevorzugten Herstellungsverfahren werden die Trägerschicht, die eine oder beide Zwischenschichten und die eine oder beide Schichten der Selbstklebemasse durch einen Kaschierprozeß, insbesondere einem kaltem Kaschierprozeß, zusammengeführt.

In einem zweiten bevorzugten Verfahren wird die Trägerschicht zunächst durch einen Kalandrierprozeß auf der von einem Hilfsträger unterstützten, fertig ausgebildeten Zwischenschicht ausgeformt. Die andere Seite der Trägerschicht wird anschließend gegebenenfalls mit einer zweiten Zwischenschicht samt Hilfsträger eingedeckt oder im Falle eines beidseitig mit Zwischenschicht versehenen Hilfsträgers mit der auf der anderen Seite befindlichen zweiten Zwischenschicht während des Aufwickelns des Laminates zur Rolle in Verbindung gebracht. Der Hilfsträger oder die Hilfsträger werden im nächsten Verfahrensschritt abgezogen, abschließend auf die eine oder beide Zwischenschichten eine selbstklebende Beschichtung aufgetragen.
Da die Zwischenschicht auf der spiegelglatten Oberfläche eines Hilfsträgers ausgebildet wird, weist die dem Träger entgegengesetzte Seite der Zwischenschicht, quasi als Negativabdruck der Oberfläche des Hilfsträgers, ebenfalls eine spiegelglatte Oberfläche auf und bietet der im Transferverfahren aufgetragenen Klebemasse eine optimale Verklebungsfläche.
Die Zwischenschicht auf Basis Polyphenylenether besitzt eine Glasübergangstemperatur von ungefähr 200 °C, liegt also bei der Anwendungstemperatur im energieelasischen Bereich vor und trägt dazu bei, Spannungsspitzen während der Verklebung zu dissipieren.

Es wurde gefunden, daß die Zwischenschicht aus Polyphenylenether sehr gut geeignet ist, um als Barriere gegen aus der gummielastischen Trägerschicht in die Selbstklebebeschichtung migrierende Bestandteile zu wirken.

Es ist von der Theorie der Autoadhäsion bekannt, daß zwei feste Stoffe gleicher Zusammensetzung, somit gleicher Kohäsionsenergie, sich unter Aufhebung ihrer Grenzfläche spontan miteinander durch Diffusion vereinigen, wenn sie sich innerhalb der Reichweite der van der Waalsschen Kräfte berühren und durch die mikrobrownschen Bewegungen eine ausreichende Beweglichkeit ihrer Molekülsegmente gegeben ist. Mikrobrownsche Bewegungen setzen ein, wenn eine makromolekulare Substanz über die Glasübergangstemperatur erwärmt wird, also im gummielastischen Zustand. In Hinblick auf die Diffusionsfähigkeit eines makromolekularen Stoffes dürfen die für das Bestehen einer Gummielastizität erforderlichen Vernetzungsstellen jedoch nicht chemischer Natur sein, sondern müssen von thermisch reversibel lösbaren "dynamischen Haftpunkten" infolge des entanglements der Makromoleküle bestehen oder von zwischenmolekularen Kräften herrühren.

Diffusion findet auch statt, wenn sich zwei verschiedene, aber ineinander lösliche Stoffe gemäß den beschriebenen Voraussetzungen berühren und wenn sich zumindest einer von beiden Stoffen im gummielastischen Zustand befindet. Die ausgezeichnete Verträglichkeit von styrolhaltigen Polymeren mit Polyphenylenether führt zu einer spontanen temperatur- und zeitabhängigen Interdiffusion, wenn beide Stoffe sich berühren.
So ist die Polymer-Polymer-Interdiffusion an der Grenzfläche zwischen Polyphenylenether und styrolhaltigen Polymeren sehr ausführlich von der Fa. Hüls untersucht worden und hat unter der Bezeichnung "Kunststoff-Kautschuk-Verbund" Eingang in die Praxis gefunden.

Die vorliegende Erfindung beschreibt die Konstruktion und das Verfahren zur Herstellung eines Selbstklebebandes unter Ausnutzung dieses Effektes. Der erfindungsgemäße Träger des Selbstklebebandes besteht zum überwiegenden Anteil aus einem Styrol-Butadien-Copolymeren und die erfindungsgemäße Zwischenschicht besteht aus einem Polyphenylenether. Die feste Verbindung der beiden durch Trockenkaschierung miteinander in Kontakt gebrachten Schichten wird im wesentlichen durch einen Diffusionsprozeß erzielt, bei dem styrolhaltige Molekülsegmente aus dem gummielastischen Träger, der eine Glasübergangstemperatur von -65 °C besitzt, in die Schicht aus dem glasigen Polyphenylenether mit einer Glasübergangstemperatur von ungefähr 200 °C diffundieren.

Die Diffusion kann bei Lagerung des gefertigten Laminats aus Trägerschicht und Zwischenschicht durch erhöhte Temperatur beschleunigt werden, findet aber auch bei Raumtemperatur statt. Als optimale Zeitspannen für die Diffusion haben sich solche erwiesen, die in dem Zeitfenster zwischen 24 Stunden und 240 Stunden liegen. Alternativ ist es auch möglich, die auf Polyphenylenether basierende Zwischenschicht bei Temperaturen höher als 120 °C auf den Träger zu laminieren, um somit den Diffusionsprozeß bereits inline weitgehend ablaufen zu lassen.

Die geschilderten Eigenschaften stellen sicher, daß ein Delaminieren des Klebebands auch unter hohen Beanspruchungen nicht auftritt.

Im folgenden soll die Erfindung anhand mehrerer Beispiele näher erläutert werden, ohne damit die Erfindung unnötig einschränken zu wollen.

### Beispiele

### Beispiel 1

Eine Trägerschicht der in Tabelle 1 angegebene Zusammensetzung wurde in einem Innenmischer hergestellt, und zwar unter den in der Gummiindustrie geläufigen Bedingungen.

**Tabelle 1:**

| Zusammensetzung der Trägerschicht | |
|---|---|
| | Gewichtsanteile |
| stat. Styrol-Butadien-Copolymer mit 23,5 Gew.-% Styrol | 66 |
| Kreide | 26 |
| Ruß | 6,5 |
| Alterungsschutzmittel | 1,5 |

Mittels eines Kalanders wurde die Mischung auf einen beidseitig mit der Zwischenschicht beschichteten Hilfsträger ausgeformt und zur Rolle aufgewickelt, so daß die Rückseite des Trägers mit der während seiner Ausformung von ihm abgewandten Zwischenschicht in Kontakt kommt. Als Hilfsträger wurde eine 25 - 50 µm starke Polyethylenterephthalatfolie eingesetzt. Während der Lagerung in der Rolle fand über einen Zeitraum von 48 Stunden auf beiden Seiten des Laminates die Diffusion zwischen Träger und Zwischenschicht statt.

Um einen nur einseitig mit einer Zwischenschicht versehenen Träger zu erhalten, wurde eine Polyethylenterephthalatfolie eingesetzt, die nur auf einer Seite mit der Zwischenschicht beschichtet war und die, wenn eine Aufwicklung zur Rolle erforderlich war, auf der anderen Seite mit einer antiadhäsive Beschichtung ausgerüstet war.
Es war weiterhin möglich, den Träger auf einem ohne Zwischenschicht versehenen Hilfsträger auszuformen und ihn danach ein- oder beidseitig mit einer Zwischenschicht auszurüsten. Der Hilfsträger konnte antiadhäsiv beschichtet sein, um eine einfachere Ablösbarkeit des Trägers zu erreichen.

Das Entfernen der Hilfsträger von der Zwischenschicht erfolgte immer erst dann, wenn zwischen Träger und Zwischenschicht der Diffusionsprozeß stattgefunden hatte.
Das konnte inline unmittelbar nach dem Aufkaschieren der Zwischenschicht geschehen, wenn der Kaschierprozeß bei Temperaturen höher als 120 °C durchgeführt wurde. Das konnte auch in separaten Arbeitsgängen vorgenommen werden, wenn wegen der Kaschierung bei Raumtemperatur eine Lagerzeit erforderlich war, um die Diffusion ablaufen zu lassen.

Die Zwischenschicht wurde aus Vestoran 800 ® der Firma Hüls hergestellt. Dazu wurde die unter Rückfluß in Toluol hergestellte Lösung des Polyphenylenethers auf einer Polyesterfolie in einer Strichstärke von 4 µm ausgestrichen und getrocknet. In einer weiteren Versuchsreihe betrug die Strichstärke 8 µm.

Als Selbstklebemasse fand ein Copolymerisat aus Methylacrylat mit 2-Etylhexylacrylat und Acrylsäure Verwendung, welches mit 0,5 % eines mit Titan gebildeten Innerkomplexes auf Basis Acetylaceton bei einer Temperatur ab 100 °C vernetzt wurde.
Das beschriebene Copolymerisat hat die folgende Zusammensetzung:
30 Gew.-% Methylacrylat
60 Gew.-% 2-Etylhexylacrylat
10 Gew.-% Acrylsäure

Die Selbstklebemasse wurde auf einem antiadhäsiv ausgerüsteten Hilfsträger in einer Trockenstrichstärke von 50 µm ausgestrichen und getrocknet. Zur Herstellung des erfindungsgemäßen Klebebandes wurde die getrocknete Selbstklebemasse im Transferverfahren kalt auf die nach dem Abrollen des Trägers frei liegende Zwischenschicht kaschiert, nachdem der Hilfsträger für die Zwischenschicht entfernt wurde. Das Verbundprodukt wurde einer Elektronenstrahlvernetzung mit 80 kGy zugeführt, zusammen mit dem Hilfsträger für den Kleber zur Rolle gewickelt.
Der gleiche Prozeß wiederholte sich bei der Ausrüstung der zweiten Zwischenschicht des Trägers mit Kleber. Dabei wurde der Hilfsträger für die erste Kleberschicht entfernt und der für die zweite Kleberschicht im Verbundprodukt belassen.

Es war auch möglich, die Vernetzung mit Elektronenstrahlen vor der Beschichtung mit Kleber durchzuführen, wenn für die Anwendung des Produktes höhere Klebkräfte erforderlich waren und eine geringere Kohäsion des Klebers nicht von Nachteil war. Weiterhin war es möglich, ein Laminat aus Träger, Zwischenschicht und Kleber herzustellen, dieses zunächst zu lagern und zu einem späteren Zeitpunkt mit Elektronenstrahlen zu vernetzen.

Darüber hinaus bestand die Möglichkeit, alle Schichten des Produktes inline über mehrere Kaschierstationen bei Temperaturen höher als 120 °C miteinander zu laminieren und inline mit Elektronenstrahlen zu vernetzen.

### Beispiel 2

Eine Trägerschicht mit der gleichen Zusammensetzung, wie sie in Beispiel 1 angegeben ist, wurde auf einen Hilfsträger aus antiadhäsiv beschichtetem Polypropylen in einer Schichtdicke von 0,5 mm mittels eines Kalanders aufgetragen.

Als Zwischenschicht wurde Vestoran 1900 ® der Firma Hüls verwendet, ein mit Polystyrol modifizierter Polyphenylenether. An einem Extruder mit Flachdüse wurde aus dem Vestoran 1900 ® eine Folie mit einer Schichtdicke von 30 µm hergestellt.

Als Selbstklebemasse fand ein Harz-Kautschuk-Gemisch Verwendung, und zwar in der nachfolgend angegebenen Zusammensetzung:
- 45 Gew.-%: eines Dreiblockpolymeren auf Basis Styrol-Butadien-Styrol
- 15 Gew.-%: eines synthetischen Kohlenwasserstoffharzes mit einem Schmelzpunkt von 125 °C
- 10 Gew.-%: eines aliphatischen Kohlenwasserstoffharzes mit einem Schmelzpunkt von 95 °C
- 15 Gew.-%: eines veresterten Kolophoniumharzes mit einem Schmelzpunkt von 100 °C
- 15 Gew.-%: eines Weichmachers auf Basis eines hydrierten Kolophoniumesters

Die Bestandteile der Selbstklebemasse wurden in einem üblichen Misch- und Rührwerk in Benzin gelöst. Die gelöste Selbstklebemasse wurde dann auf einem antiadhäsiv ausgerüsteten Hilfsträger in einer Trockenstrichstärke von 50 µm ausgestrichen und getrocknet.

Die Bestandteile der Selbstklebemasse konnten auch durch Kneten oder Extrudieren bei Temperaturen von 140 °C und bis zu 180 °C in einer für die Herstellung von Schmelzhaftklebern üblichen Verfahrensweise gemischt werden. Die hergestellte Masse wurde dann an einem der üblichen Auftragswerke für Schmelzhaftkleber auf einen antiadhäsiv ausgerüsteten Hilfsträger in einer Strichstärke von 50 µm aufgetragen.

Zur Herstellung des erfindungsgemäßen Klebebands wurden die Trägerschicht, eine Zwischenschicht und eine Kleberschicht mit dem entsprechenden Hilfsträger an einem Kalander kalt zusammengeführt, wobei gleichzeitig die Polypropylenfolie von dem Träger entfernt wurde.

Innerhalb der nächsten 48 Stunden fand die Interdiffusion statt, die die Verankerung der einzelnen Schichten untereinander bewirkte.

Abschließend erfolgte die Vernetzung des Laminates mit Elektronenstrahlen bei einer Strahlendosis von 60 kGy.

## Patentansprüche

1. Ein- oder beidseitig selbstklebend ausgerüstetes Klebeband mit einer gummielastischen Trägerschicht, **dadurch gekennzeichnet, daß**
a) die Trägerschicht im wesentlichen aus einem Styrol-Butadien-Copolymer besteht,
b) auf die Trägerschicht ein- oder beidseitig eine Selbstklebemasse aufgetragen ist, wobei zwischen Trägerschicht und Selbstklebemasse
c) eine Zwischenschicht aus Polyphenylenether vorhanden ist.

2. Klebeband nach Anspruch 1, **dadurch gekennzeichnet, daß**
der Polyphenylenether aus Poly(oxy-2,6-dimethyl-p-phenylen) besteht.

3. Klebeband nach den Ansprüchen 1 oder 2, **dadurch gekennzeichnet, daß**
der Polyphenylenether unterschüssig mit Polystyrol, Polyamid, einem Styrol-Acrylnitril-Copolymer oder einem Blockcopolymer auf Basis SEBS abgemischt ist.

4. Klebeband nach den Ansprüchen 1 bis 3, **dadurch gekennzeichnet, daß**
die Zwischenschicht eine Dicke von 5 µm bis 40 µm aufweist

5. Klebeband nach den Ansprüchen 1 bis 4, **dadurch gekennzeichnet, daß**
die Zwischenschicht durch Extrusion mit oder ohne Hilfsträger hergestellt wird.

6. Klebeband nach den Ansprüchen 1 bis 5, **dadurch gekennzeichnet, daß**
die Zwischenschicht aus gelöster Form auf einem Hilfsträger hergestellt wird.

7. Klebeband nach den Ansprüchen 1 bis 6, **dadurch gekennzeichnet, daß**
der Styrolanteil in der Gesamtzusammensetzung der Trägerschicht mindestens 12 Gew.-% beträgt.

8. Klebeband nach den Ansprüchen 1 bis 7, **dadurch gekennzeichnet, daß**
das Styrol-Butadien-Copolymer der Trägerschicht ein aus Lösung oder im Emulsionspolymerisationsverfahren hergestelltes statistisches Copolymer mit einem Anteil von mindestens 23,5 Gew.-% Styrol ist.

9. Klebeband nach den Ansprüchen 1 bis 8, **dadurch gekennzeichnet, daß**
die Selbstklebebeschichtung aus einem Copolymerisat von Methylacrylat mit 2-Etylhexylacrylat und Acrylsäure, mit einer Zusammensetzung von 20 Gew.-% bis 40 Gew.-% Methylacrylat, 20 Gew.-% bis 70 Gew.-% 2-Etylhexylacrylat und 0 Gew.-% bis 10 Gew.-% Acrylsäure besteht.

10. Verfahren zur Herstellung eines Klebebands gemäß mindestens einem der vorhergehenden Ansprüche, **dadurch gekennzeichnet, daß**
die Trägerschicht, die eine oder beide Zwischenschichten und die eine oder beide Schichten der Selbstklebemasse durch einen Kaschierprozeß zusammengeführt werden.

11. Verfahren zur Herstellung eines Klebebands gemäß mindestens einem der vorhergehenden Ansprüche, **dadurch gekennzeichnet, daß**
die Trägerschicht durch einen Kalandrierprozeß auf der von einem Hilfsträger unterstützten, fertig ausgebildeten Zwischenschicht ausgeformt wird,
der Hilfsträger oder die Hilfsträger anschließend abgezogen werden,
auf die eine oder beide Zwischenschichten jeweils eine selbstklebende Beschichtung aufgetragen wird.

## Claims

1. Single- or double-sidedly self-adhesively treated adhesive tape having an elastomeric backing layer, **characterized in that**
a) the backing layer consists essentially of a styrene-butadiene copolymer,
b) a self-adhesive composition is applied to one or both sides of the backing layer, and between backing layer and self-adhesive composition
c) there is an interlayer comprising polyphenylene ether.

2. Adhesive tape according to Claim 1, **characterized in that** the polyphenylene ether consists of poly(oxy-2,6-dimethyl-p-phenylene).

3. Adhesive tape according to Claim 1 or 2, **characterized in that** the polyphenylene ether has been blended with minor amounts of polystyrene, polyamide, a styrene-acrylonitrile copolymer or a block copolymer based on SEBS.

4. Adhesive tape according to Claims 1 to 3, **characterized in that** the interlayer has a thickness of from 5 µm to 40 µm.

5. Adhesive tape according to Claims 1 to 4, **characterized in that** the interlayer is produced by extrusion with or without auxiliary backing(s).

6. Adhesive tape according to Claims 1 to 5, **characterized in that** the interlayer is produced from solution on an auxiliary backing.

7. Adhesive tape according to Claims 1 to 6, **characterized in that** the styrene content in the overall composition of the backing layer is at least 12% by weight.

8. Adhesive tape according to Claims 1 to 7, **characterized in that** the styrene-butadiene copolymer of the backing layer is a random copolymer, prepared from solution or by emulsion polymerization, with a styrene fraction of at least 23.5% by weight.

9. Adhesive tape according to Claims 1 to 8, **characterized in that** the self-adhesive coating consists of a copolymer of methyl acrylate with 2-ethylhexyl acrylate and acrylic acid having a composition of from 20 to 40% by weight methyl acrylate, from 20 to 70% by weight 2-ethylhexyl acrylate and from 0 to 10% by weight acrylic acid.

10. Process for producing an adhesive tape according to at least one of the preceding claims, **characterized in that** the backing layer, one or both interlayers and one or both coats of the self-adhesive composition are brought together by a laminating process.

11. Process for producing an adhesive tape according to at least one of the preceding claims, **characterized in that** the backing layer is shaped and applied by a calendering process onto the ready-formed interlayer, which is in turn supported by an auxiliary backing,
the auxiliary backing or backings is or are subsequently peeled off, and
a self-adhesive coating is applied to one or both interlayers in each case.

## Revendications

1. Ruban adhésif traité pour être autoadhésif d'un côté ou des deux, comportant une couche caoutchouteuse de support, **caractérisé en ce que**
a) la couche de support est essentiellement constituée d'un copolymère styrène-butadiène,
b) sur la couche de support est appliquée d'un côté ou des deux une matière autoadhésive, entre couche de support et matière autoadhésive étant présente
c) une couche intermédiaire à base de polyphénylène-éther.

2. Ruban adhésif selon la revendication 1, **caractérisé en ce que** le polyphénylène-éther consiste en poly(oxy-2,6-diméthyl-p-phénylène).

3. Ruban adhésif selon la revendication 1 ou 2, **caractérisé en ce que** le polyphénylène-éther est mélangé en moindre quantité avec du polystyrène, du polyamide, un copolymère styrène-acrylonitrile ou un copolymère séquencé à base de SEBS.

4. Ruban adhésif selon les revendications 1 à 3, **caractérisé en ce que** la couche intermédiaire présente une épaisseur de 5 µm à 40 µm.

5. Ruban adhésif selon les revendications 1 à 4, **caractérisé en ce que** la couche intermédiaire est produite par extrusion avec ou sans support auxiliaire.

6. Ruban adhésif selon les revendications 1 à 5, **caractérisé en ce que** la couche intermédiaire est produite sous forme dissoute avec ou sans support auxiliaire.

7. Ruban adhésif selon les revendications 1 à 6, **caractérisé en ce que** la proportion de styrène dans la composition totale de la couche de support est d'au moins 12% en poids.

8. Ruban adhésif selon les revendications 1 à 7, **caractérisé en ce que** le copolymère styrène-butadiène de la couche de support est un copolymère statistique ayant une teneur en styrène d'au moins 23,5% en poids, préparé par le procédé de polymérisation en solution ou en émulsion.

9. Ruban adhésif selon les revendications 1 à 8, **caractérisé en ce que** le revêtement autoadhésif est constitué d'un copolymère d'acrylate de méthyle, acrylate de 2-éthylhexyle et acide acrylique, ayant une composition de 20% en poids à 40% en poids d'acrylate de méthyle, de 20% en poids à 70% en poids d'acrylate de 2-éthylhexyle et de 0% en poids à 10% en poids d'acide acrylique.

10. Procédé pour la fabrication d'un ruban adhésif selon au moins l'une des revendications précédentes, **caractérisé en ce que** la couche de support, la couche intermédiaire ou les deux couches intermédiaires et la couche ou les deux couches de la matière autoadhésive sont envoyées ensemble dans un processus de contrecollage.

11. Procédé pour la fabrication d'un ruban adhésif selon au moins l'une des revendications précédentes, **caractérisé en ce que**
la couche de support est appliquée par un processus de calandrage sur la couche intermédiaire formée, prête, supportée par un support auxiliaire,
le support auxiliaire ou les supports auxiliaires est(sont) ensuite retiré(s),
un revêtement autoadhésif est appliqué sur la couche intermédiaire ou, respectivement, sur les deux couches intermédiaires.
